(19) **Europäisches Patentamt / European Patent Office / Office européen des brevets**

(11) **EP 2 246 714 A2**

(12) # DEMANDE DE BREVET EUROPEEN

(43) Date de publication:
**03.11.2010 Bulletin 2010/44**

(21) Numéro de dépôt: **10290146.9**

(22) Date de dépôt: **19.03.2010**

(51) Int Cl.:
*G01V 1/30* (2006.01)     *G01V 11/00* (2006.01)

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA ME RS**

(30) Priorité: **28.04.2009 FR 0902071**

(71) Demandeur: **IFP Energies nouvelles**
**92852 Rueil-Malmaison Cedex (FR)**

(72) Inventeurs:
- **Hu, Lin-Ying**
  **78380 Bougival (FR)**
- **Patacz, Virginie**
  **62580 Vimy (FR)**

(54) **Méthode pour modéliser un milieu hétérogène souterrain à partir de statistique multipoint**

(57)    - Procédé de construction d'une image représentant la distribution d'une propriété physique catégorielle représentative d'une zone souterraine.

- On construit une première image d'apprentissage représentative d'une structure géométrique de la propriété catégorielle. Puis, à partir de cette première image d'apprentissage, on construit des images d'apprentissage représentatives des répartitions de plusieurs propriétés auxiliaires. A partir de l'ensemble des images d'apprentissage, on détermine une loi de probabilité de la propriété catégorielle et une loi de probabilité de chaque propriété auxiliaire pour un pixel donné en fonction des valeurs des pixels voisins. A partir de ces lois et des images représentatives de la distribution des propriétés physiques auxiliaires dans la zone, et pour chaque pixel de l'image à construire, on calcule une loi de probabilité de la propriété catégorielle. Enfin, on détermine la valeur de la propriété catégorielle, en effectuant un tirage aléatoire dans cette loi de probabilité ainsi calculée.

- Applications notamment à l'exploitation de gisements pétroliers.

**Fig. 4**

EP 2 246 714 A2

## Description

La présente invention concerne le domaine de l'exploration et l'exploitation de gisements pétroliers, et plus particulièrement le domaine de l'imagerie des gisements pétroliers. La construction d'images, représentatives du sous-sol et compatibles avec des données mesurées aux puits et/ou sur l'ensemble du gisement étudié, favorise l'exploitation de tels gisements.

L'étude d'un champ pétrolier, nécessite la construction de modèles, dits « modèles géologiques » au sens large. Ces modèles bien connus et largement utilisés dans l'industrie pétrolière, permettent de déterminer de nombreux paramètres techniques relatifs à la recherche, l'étude ou l'exploitation d'un réservoir, d'hydrocarbures par exemple. En effet, ce modèle géologique est représentatif de la structure du réservoir ainsi que de son comportement. On peut ainsi par exemple déterminer quelles sont les zones qui ont le plus de chances de contenir des hydrocarbures, les zones dans lesquelles il peut être intéressant/nécessaire de forer un puit d'injection pour améliorer la récupération des hydrocarbures, le type d'outils à utiliser, les propriétés des fluides utilisés et récupérés.... Ces interprétations de modèles géologiques en termes de « paramètres techniques d'exploitation » sont bien connues des spécialistes, même si de nouvelles méthodes sont régulièrement développées. Il est donc crucial, dans le domaine pétrolier, de construire un modèle aussi précis que possible. Pour ce faire, l'intégration de toutes les données disponibles est indispensable.

Les réservoirs pétroliers sont en général des milieux très hétérogènes et fracturés. La modélisation d'un réservoir, c'est-à-dire la construction d'un modèle géologique représentatif du réservoir, nécessite de recourir à des procédés de construction dits « probabilistes » du fait de la limitation de l'information disponible (nombre de puits restreint, ...). De ce fait, les modèles géologiques construits à partir de ces procédés probabilistes sont appelés « modèles stochastiques ». La construction d'un modèle stochastique de réservoir doit d'abord dépendre de l'environnement du dépôt géologique, ce qui permet de représenter les hétérogénéités majeures qui contrôlent l'écoulement des fluides. Ensuite, un modèle doit être contraint par des données quantitatives telles que mesures de carottes, diagraphie, sismique, ce qui permet d'augmenter davantage la fiabilité du modèle pour la prévision en production.

Un modèle géologique constitue une maquette du sous-sol, représentative à la fois de sa structure et de son comportement. Généralement, ce type de maquette est représenté sur un ordinateur, et l'on parle alors de modèle numérique. En deux dimensions (2D), on parle de carte. Ainsi, une carte correspond à une image, constituées de pixels, chacun des pixels contenant une information relative au comportement du sous-sol étudié (un réservoir pétrolier par exemple). Ces pixels correspondent à une position géographique précise, et sont repérés par des coordonnées. Lorsque l'on attribue des valeurs à un pixel, par simulation par exemple, on parle alors de point de simulation. L'image représentative (la carte ou le modèle) est générée sur tout support (papier, écran d'ordinateur, ...).

## État de la technique

L'objectif est donc de construire une image à partir de la structure géologique, et de contraindre cette image en :

- prenant en compte les concepts géologiques de façon à tenir compte de l'architecture géologique du gisement ;

- prenant en compte le caractère non stationnaire de l'hétérogénéité à l'échelle du gisement pétrolier étudié ;

- intégrant toutes données disponibles, sous forme de contraintes spatiales continues ou non, quantitatives et/ou qualitatives, de façon à construire un modèle aussi précis que possible.

On connaît de nombreux procédés pour construire des images, mais aucun ne permet de remplir de façon satisfaisantes toues les contraintes précitées.

Les images issues de procédés de type multigaussien ou plus généralement de procédés de type pixel ont l'avantage d'être plus facilement contraintes par des mesures quantitatives. Mais l'inconvénient de ces procédés est la difficulté de prendre en compte les concepts géologiques. On entend par « concept géologique » les règles physiques de sédimentation dans chaque type d'environnement de dépôt.

Au contraire, les images issues de procédés de type objet et de procédés de type génétiques (basés sur les processus sédimentaires), permettent de mieux prendre en compte l'architecture géologique, mais leur contrainte par des mesures quantitatives est souvent plus difficile à réaliser.

Les procédés de construction d'images de type simulation par des statistiques multipoints permettent de résoudre ce problème. En effet, les modèles générés par simulation de type objet ou génétique fournissent des images non contraintes qui peuvent être utilisées comme images d'apprentissage pour l'inférence des statistiques multipoints. En se basant sur ces statistiques, il est ensuite possible de régénérer des images pixel par pixel, en utilisant un algorithme de simulation séquentielle. Ces images reproduisent les caractéristiques essentielles des images issues de procédés de type objet ou génétique. La flexibilité de la simulation séquentielle pour le conditionnement aux données quantitatives est un atout supplémentaire. Dans un premier temps, l'approche géostatistique multipoints est développée dans un cadre stationnaire où l'on suppose que la variabilité spatiale de l'hétérogénéité du réservoir se stabilise au delà d'une certaine distance bien inférieure à la taille du champ. Cette approche est décrite dans les documents suivants :

Guardiano, F. and Srivastava, M. (1993) : Multivariate geostatistics : beyond bivariate moments. In Soares, A., ed., Geostatistics Troia'92, vol. 1 : Kluwer Acad. Publ., Dordrecht, The Netherlands, p. 133-144.

Strebelle S. and Journel, A. (2000) : Sequential simulation drawing structures from training images. In Kleingeld and Krige (eds.), Geostatistics 2000 Cape Town, Volume 1.

Or, dans la plupart des cas en pratique, l'hétérogénéité est non stationnaire à l'échelle du champ pétrolier étudié. Cette variabilité non stationnaire est souvent accessible via une information, issue par exemple de la sismique, qui est de basse résolution mais couvre tout le champ.

Ensuite, on connaît des méthodes permettant de prendre en compte cette information dite auxiliaire dans une simulation par l'approche multipoint.

Une première méthode consiste à utiliser, en plus d'une image d'apprentissage de la variable principale, une seconde image d'apprentissage de la variable auxiliaire. Cette dernière est obtenue par simulation numérique sur la première. Pour un état donné d'un voisinage de points de la variable principale et une donnée de la variable auxiliaire au point de simulation, on identifie l'ensemble des configurations de points cohérentes à la fois avec l'état de ce voisinage et avec cette donnée auxiliaire, et on obtient la loi empirique de la variable principale au point de simulation conditionnée à la fois par l'état de ce voisinage et par la donnée auxiliaire. Cette méthode bien directe et cohérente, présente toutefois un grand inconvénient. En effet, à cause du caractère souvent continu de la variable auxiliaire, il est généralement peu probable de trouver une configuration, dans les deux images d'apprentissage, qui coïncide à la fois avec l'état d'un voisinage donné et avec une donnée de la variable auxiliaire. Une façon de traiter cette difficulté est de classifier la variable auxiliaire en plusieurs classes, ce qui rend la méthode quelque peu arbitraire pour seulement peu d'atténuation du problème. Le document suivant décrit les différents aspects de cette méthode:

Strebelle S. (2000) : Sequential simulation drawing structures from training images. Ph.D. Thesis, Department of Geological and Environmental Sciences, Stanford University.

Une autre méthode qui prend appui sur un modèle analytique, le "tau model", est décrite dans:

Journel A.G. (2002) Combining Knowledge From Diverse Sources: An Alternative to Traditional Data Independence Hypotheses. Math.Geology, Vo1.35, N.5.

L'utilisation de cette méthode pour la simulation multipoint non stationnaire est décrite notamment dans:

Strebelle S., Payrazyan K., Caers J. (2002) : Modeling of a Deepwater Turbidity Reservoir Conditional to Seismic Data Using Multiple-Point Geostatistics. SPE 77425.

Cette méthode permet d'exprimer la probabilité d'un événement noté A sachant les événements notés B et C en fonction de la probabilité de A et celles de A sachant B et C respectivement. L'utilisation de cette méthode dans la simulation multipoint non stationnaire consiste à calculer la probabilité de A (présence d'une lithologie au point de simulation) sachant B (état d'un voisinage de lithologie) et C (valeur donnée de la variable auxiliaire) en fonction de la probabilité de A (proportion globale du lithologie), la probabilité de A sachant B (issue de l'image d'apprentissage de la variable principale) et la probabilité de A sachant C (issue de la contrainte auxiliaire). Cette fonction dépend d'un paramètre "tau". La difficulté d'utilisation de cette méthode en pratique provient de l'inférence de ce paramètre, qui dépend non seulement de chaque réservoir, mais aussi de chaque point de simulation d'un même réservoir. Dans l'utilisation actuelle de cette méthode, "tau" est simplement affecté à la valeur 1. Le degré d'approximation d'une telle affectation est difficilement évaluable.

Les deux méthodes précédentes, à savoir l'algorithme de classement et le modèle Tau, révèlent des artefacts géométriques, sans pour autant restituer les contraintes non stationnaires. Par le brevet FR 2.905.181, ou la publication Chugunova, T and Hu, L.Y. (2008) « Multiple-point simulations constrained to continuous auxiliary data », Mathematical Geosciences, Vo1.40, No.2, on connaît une troisième méthode de simulation multi-points non stationnaire. Cette méthode permet d'éviter les inconvénients des deux algorithmes précédents en intégrant des contraintes spatiales continues. Toutefois, cette méthode est limitée, car elle ne permet pas de prendre en compte plusieurs contraintes auxiliaires. Or, dans la pratique courante, disposant généralement de multiples contraintes auxiliaires, il est préférable, pour la qualité de l'image du gisement pétrolier obtenue, de prendre en compte toutes ces données.

Le procédé selon l'invention est une méthode alternative permettant de construire une image représentative d'un gisement pétrolier, à partir de données mesurées aux puits et/ou sur l'ensemble du gisement étudié. Le procédé permet de construire une image représentant la distribution d'une propriété physique catégorielle, telle que la lithologie ou la fracturation du sous-sol, prenant en compte les concepts géologiques, le caractère non stationnaire de l'hétérogénéité à l'échelle du gisement pétrolier étudié, et en intégrant toutes données disponibles, sous forme de contraintes spatiales continues ou non, quantitatives et/ou qualitatives.

**La méthode selon l'invention**

L'invention concerne un procédé de construction d'une image représentative de la distribution d'une propriété physique catégorielle dans un milieu hétérogène poreux. Chaque pixel de cette image est associé à une position géographique. Le procédé comporte les étapes suivantes :

- on construit une première image d'apprentissage en affectant à chaque pixel de cette image une valeur de propriété physique catégorielle ;

- on choisit au moins deux propriétés physiques auxiliaires, dont les distributions dans l'espace sont représentatives de la distribution dans l'espace de ladite propriété physique catégorielle ;

- on construit, pour chaque propriété physique auxiliaire, une image d'apprentissage, en affectant à chaque pixel de ces images une valeur de propriété physique auxiliaire déterminée à partir de ladite première image d'apprentissage ;

- on définit pour tout pixel d'une image d'apprentissage, dit pixel central, un voisinage de $L$ pixels les plus proches du pixel central, et l'on détermine pour tous les voisinages de 0 pixel à $L$ pixels et pour tous les états particuliers d'un voisinage, c'est-à-dire l'ensemble des valeurs de la propriété physique catégorielle prises par les pixels du voisinage : un histogramme empirique des valeurs de la propriété physique catégorielle au centre dudit voisinage conditionné par ledit état, et un histogramme empirique des valeurs de chaque propriété physique auxiliaire au centre dudit voisinage conditionné par ledit état ;

- on construit, pour chaque propriété physique auxiliaire, une image, en affectant à chaque pixel de ces images une valeur de propriété physique auxiliaire obtenue à partir de mesures réalisées au sein dudit milieu hétérogène poreux ; et pour chaque pixel de l'image à construire,

- on calcule une loi de probabilité de ladite propriété physique catégorielle, à partir de valeurs prises par l'ensemble des pixels d'un voisinage dudit pixel, des valeurs audit pixel desdites propriétés physiques auxiliaires issues desdites images réelles, et desdits histogrammes empiriques ;

- on détermine une valeur de propriété catégorielle audit pixel de l'image à construire, en effectuant un tirage aléatoire dans ladite loi de probabilité ainsi calculée ; et

- on construit ladite image représentative de la distribution de ladite propriété physique catégorielle, en répétant les deux dernières étapes pour chaque pixel de l'image à construire.

Selon l'invention, on peut déterminer les histogrammes en scannant simultanément les images d'apprentissage à l'aide du voisinage.

Selon un mode de réalisation, les histogrammes peuvent être stockés dans une structure d'arbre constituée d'un ensemble de noeuds de niveaux indicés entre 0 et le nombre $L$ correspondant à la taille du voisinage, un noeud de niveau $n$ correspondant à un voisinage complet de taille $n$, chaque noeud de l'arbre étant associé à un état particulier d'un voisinage complet de la propriété catégorielle $PP$. Selon ce mode de réalisation, la loi de probabilité de la propriété physique catégorielle, au niveau d'un pixel à simuler, peut être calculée à l'aide des étapes suivantes :

- on sélectionne des noeuds de l'arbre correspondant à un niveau $Ns$, correspondant à un voisinage complet de taille $s$ ;

- parmi l'ensemble des noeuds du niveau $Ns$, on identifie ceux dont les valeurs de la propriété physique catégorielle des pixels du voisinage sont identiques à celles du voisinage du pixel à simuler ;

- parmi les noeuds ainsi identifiés, on retient ceux dont l'histogramme empirique de chaque propriété physique auxiliaire est compatible avec la propriété physique auxiliaire correspondante, obtenue à partir de mesures ;

- on calcule la loi de la propriété physique catégorielle dudit pixel à simuler en utilisant les noeuds retenus et en multipliant entre eux les histogrammes empiriques déterminés pour lesdits noeuds.

Selon l'invention, une propriété physique auxiliaire peut être compatible avec un histogramme empirique : si cette propriété est comprise entre le minimum et le maximum des valeurs auxiliaires de cet histogramme ; ou, si cet histogramme admet une probabilité non nulle pour la propriété physique auxiliaire.

Enfin, selon l'invention, la propriété physique catégorielle peut être choisie parmi l'une des propriétés suivantes : lithologie, état de fracturation, présence de chenaux. Et les propriétés physiques auxiliaires peuvent être choisies parmi les propriétés suivantes : proportions lithologiques, densité de fracturation, attributs sismiques.

**Présentation succincte des figures**

D'autres caractéristiques et avantages de la méthode selon l'invention apparaîtront plus précisément à la lecture de la description ci-après des exemples non limitatifs d'application, en se référant aux dessins annexés où :

- les figures 1A, 1B et 1C montrent respectivement : un « template » rectangulaire, dont le nombre de pixels est $L$=24 ; un voisinage complet ; un voisinage non complet.

- la figure 2 illustre une structure d'arbre binaire.

- les figures 3A, 3B et 3C présentent respectivement l'image d'apprentissage de la propriété principale, une des trois images d'apprentissage des propriétés auxiliaires, et une des trois images réelles de propriétés auxiliaires.

- la figure 4 présente le résultat obtenu pour la simulation multipoints selon l'invention.

- les figures 5A à 5D présentent les différents résultats obtenus pour une méthode multipoints non stationnaire avec application d'une contrainte auxiliaire unique et pour des ordres différents (A à D)

**Description détaillée de la méthode**

La présente invention concerne un procédé de construction d'une image, constituant un modèle géologique représentatif de la structure et du comportement d'une zone souterraine telle qu'un réservoir pétrolier ou un aquifère, permettant de déterminer des paramètres techniques relatifs à la recherche, l'étude ou l'exploitation de la zone. Une image constitue un ensemble de pixels, et chaque pixel est associé à une position géographique.

Le sous-sol est un milieu hétérogène poreux qui peut être caractérisé par différents types de propriétés : des propriétés physiques catégorielles (lithologies, état de fracturation, ...), des propriétés physiques continues (porosité, perméabilité, ...), des propriétés physiques indirectes (issues par exemple de campagnes sismiques).

Le procédé selon l'invention permet de générer une image, représentative de propriétés physiques catégorielles. On peut citer par exemple les lithologies (calcaire, grès, argile, etc.) ou encore l'état de fracturation. La construction d'une image représentative d'une propriété physique catégorielle, comporte l'association à chaque pixel de l'image d'une valeur de cette propriété physique catégorielle. Cette propriété physique catégorielle est appelée propriété principale ($PP$) dans la suite de la description.

Selon l'invention, les valeurs de la propriété principale ($PP$) sont contraintes par différents types de données, correspondant à différentes propriétés physiques :

- des données issues d'observations indirectes : par exemple des données issues de campagnes sismiques telles que les amplitudes sismiques ou, après interprétation, les densités de fracturation. Ces propriétés physiques constituent les propriétés auxiliaires ($PA$), elles représentent des tendances de la propriété principale ($PP$) et elles sont connues en chaque pixel de l'image.

- des données collectées directement dans le milieu ($PC$) : par exemple la description lithologique le long d'un puits, qui fournit la valeur de la propriété principale ($PP$) en un pixel (localisation du puits).

Le procédé selon l'invention comporte principalement cinq étapes :

1- construction d'une première image d'apprentissage représentative de la structure géométrique de la propriété principale $PP$ ;

2- construction, pour chaque propriété auxiliaire *PA*, d'une image d'apprentissage, dite auxiliaire, représentative de la répartition de la *PA,* à partir de la première image d'apprentissage ;

3- calcul de statistiques empiriques à partir des valeurs contenues dans l'ensemble des images ;

4- acquisition des données réelles relatives aux propriétés auxiliaires ;

5- construction d'une image représentative de la répartition de la propriété principale *PP* contrainte par la répartition de l'ensemble des propriétés auxiliaires *PA* issues des données réelles.

### 1- Construction d'une première image d'apprentissage représentative de la structure géométrique de la propriété principale *PP*

Au cours de cette étape, on construit une première image d'apprentissage en affectant à chaque pixel de cette première image d'apprentissage, une valeur de propriété physique catégorielle. La propriété physique catégorielle peut être choisie parmi l'une des propriétés suivantes : la lithologie, l'état de fracturation, la présence de chenaux.
Cette image peut être construite, par exemple, par une approche basée sur les processus sédimentaires, car elle n'a pas besoin d'être conditionnée aux données quantitatives. De telles méthodes sont bien connues des spécialistes. Nous pouvons nous référencer par exemple aux travaux suivants:

- Hu, L.Y., Joseph, P. and Dubrule, O., "Random genetic simulation of the internal geometry of deltaic sand bodies", SPE Formation Evaluation, December 1994, p.245-250.

- Lopez, S., Galli, A. and Cojan, I., "Fluvial meandering channelized reservoirs: a stochastic & process-based approach", In Proceedings of the of the Annual conference of the international association for mathematical geology, 6-12 September, 2001, Cancun, Mexico

Ce type de méthode permet de représenter les hétérogénéités majeures à partir de la seule connaissance de l'environnement du dépôt géologique. Cette première image d'apprentissage est donc construite à partir d'information a priori, et constitue une représentation de l'environnement du dépôt géologique. A chaque pixel de cette image est associée une valeur de la propriété principale *PP*. Cette image définit ainsi une structure géométrique de la propriété principale (*PP*). A ce stade, il ne s'agit pas de la structure géométrique réelle de la propriété principale (*PP*). Il s'agit seulement d'une représentation possible.

### 2- Construction d'une image d'apprentissage représentative de la répartition de chaque propriété auxiliaire *PA*

La première image d'apprentissage représente une structure géométrique de la propriété principale (*PP*) pour un environnement de dépôt donné. A partir de cette première image, qui constitue un environnement, on construit une image représentant la répartition de chaque propriété auxiliaire (*PA*) possible compte tenu de l'environnement. Pour ce faire, on affecte à chaque pixel de ces images, une valeur de propriété physique auxiliaire déterminée à partir de la première image d'apprentissage.
Selon l'invention, on choisit au moins deux propriétés physiques auxiliaires, dont les distributions dans l'espace sont représentatives de la distribution dans l'espace de la propriété physique catégorielle (*PP*). Par exemple, on peut choisir ces propriétés parmi les propriétés suivantes : les proportions lithologiques, la densité de fracturation, les attributs sismiques.
Pour construire de telles images, on peut utiliser des techniques de modélisation géophysique, telles que le tracé de rayon bien connu des spécialistes, pour déterminer des amplitudes sismiques susceptibles d'être mesurées lors d'une campagne sismique dans un milieu géologique défini par la première image d'apprentissage.
Chaque image d'apprentissage auxiliaire représente ainsi une répartition d'une propriété auxiliaire (*PA*), en accord avec l'environnement géologique défini par la première image. Elle est obtenue par des techniques de simulation numérique connues en soi (résolution d'un système d'équations physiques) en utilisant la première image comme environnement.

### 3- Calcul de statistiques empiriques à partir des valeurs contenues dans l'ensemble des images d'apprentissage

A l'issue des deux premières étapes, on dispose d'un ensemble d'images d'apprentissage : la première représente l'environnement de dépôt, elle est représentative d'une structure géométrique de la propriété physique catégorielle (*PP*), et chacune des autres images représente une distribution d'une propriété auxiliaire (*PA*), respectant l'environnement de la première image.

Au cours de la troisième étape, on travaille sur ces images d'apprentissage, c'est-à-dire des images pour lesquelles à chaque pixel est associée une valeur : valeur de la propriété principale *PP* pour la première image et valeur d'une propriété auxiliaire *PA* pour chacune des images auxiliaires. Ces images sont dites « d'apprentissage » car, connaissant les valeurs en chaque pixel, il est possible d'établir une relation entre la structure géométrique de la propriété principale et les valeurs des propriétés auxiliaires. A partir de cette relation, de valeurs connues et réelles de la propriété principale *PP* en certains pixels (données *PC*), et de valeurs connues et réelles des propriétés auxiliaires *PA* en tous pixels, il sera possible de construire une image complète (étape 4).

Au cours de cette étape on capture donc la structure géométrique de la propriété principale, que l'on associe à des données auxiliaires dans le but de recréer la structure à partir des données auxiliaires lorsque l'on ne connaît pas la valeur de la propriété principale en chaque pixel (étape 4). Pour ce faire, à partir de l'ensemble des images d'apprentissage, on calcule des statistiques qui nous permettent d'extraire les structures géométriques de la propriété principale et leur répartition dans le champ de simulation, c'est-à-dire l'espace géographique pour lequel on souhaite construire un modèle du sous-sol (réservoir pétrolier par exemple).

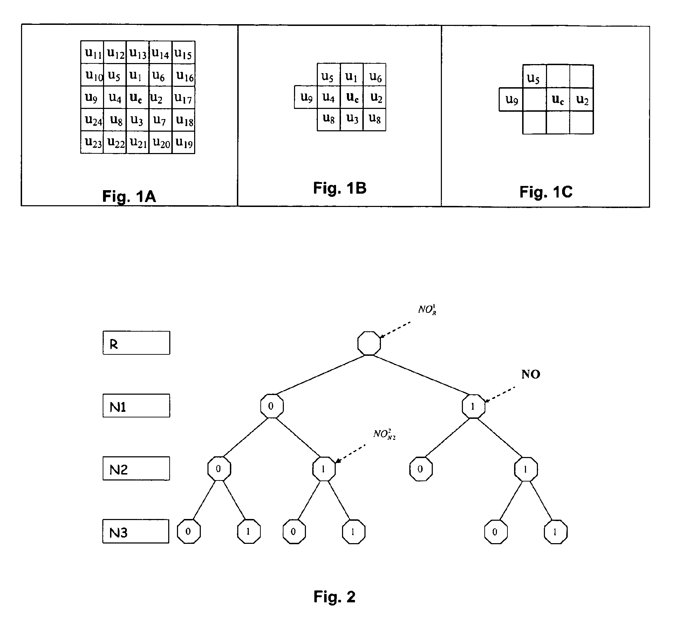

Pour évaluer ces statistiques, on définit tout d'abord un objet appelé « template » par les spécialistes. Il s'agît d'une fenêtre d'exploration, appelée également « masque ». Cet objet est constitué d'un ensemble de pixels : un pixel central et *L* pixels voisins ordonnés. Cette fenêtre d'exploration peut par exemple correspondre à un rectangle. La figure 1A illustre une telle fenêtre d'exploration dont le pixel central est représenté par $u_c$, et les pixels voisins par $u_1$, $u_2$, etc. La fenêtre d'exploration (template) est caractérisée par sa forme et son nombre de pixels (*L*+1). Celui-ci est déterminé en fonction de la taille des structures géométriques d'intérêt. Ces structures peuvent par exemple être des failles, des chenaux, etc. Le nombre *L* tout en étant relativement petit par rapport au nombre de pixels de l'image, doit être suffisamment grand de façon à ce qu'il couvre la taille des structures géométriques d'intérêt (Strebelle S. (2000), « Sequential simulation drawing structures from training images. » Ph.D. Thesis, Department of Geological and Environmental Sciences, Stanford University). Sur la figure 1A, *L*=24.

En utilisant le template, on scanne simultanément les images d'apprentissage en positionnant le centre du template sur un même pixel quelconque des images, puis en déplaçant le centre de la fenêtre d'exploration (template) simultanément sur les images de façon à ce que l'ensemble des pixels des images soit visité une et une seule fois. A chaque position de la fenêtre d'exploration (template),

a- on identifie la valeur de la propriété principale au centre du template ;

b- on identifie, pour chaque image auxiliaire, la valeur de la propriété auxiliaire au centre du template ;

c- on identifie les valeurs de la propriété principale dans le voisinage complet associé au point central du template ;

A chaque état d'un voisinage complet de taille entre 0 et *L*, on calcule l'histogramme empirique des valeurs de la propriété principale au centre du voisinage et celui des valeurs de chaque propriété auxiliaire au centre du voisinage. On appelle état d'un voisinage les valeurs prises par l'ensemble des pixels du voisinage.

Ces histogrammes empiriques sont stockés dans une structure. Cette structure est appelée « arbre », du fait de sa forme arborescente, et constitue le support des données statistiques. La structure de cet arbre est similaire à celle décrite par Strebelle et Journel dans :

Strebelle S. and Journel, A., "Sequential simulation drawing structures from training images." In Kleingeld and Krige (eds.), Geostatistics 2000 Cape Town, Volume 1.

Cet arbre est constitué d'un ensemble de noeuds de niveaux indicés entre 0 et le nombre *L* correspondant à la taille de la fenêtre d'exploration (template) préalablement choisie. La figure 2 illustre la structure d'un arbre binaire (cas où la propriété principale, telle que la lithologie, peut prendre deux valeurs), où *R* représente la racine, *N1*, *N2* et *N3* représentant trois niveaux différents. Un noeud (*NO*) de niveau *n* correspond à un voisinage complet de taille *n*. A chaque noeud de l'arbre est associé : (a) un état particulier d'un voisinage complet de la propriété physique principale *PP* ; (b) l'histogramme empirique des valeurs de la propriété principale au centre du voisinage conditionné par cet état ; (c) l'histogramme empirique des valeurs de chaque propriété auxiliaire au centre du voisinage conditionné par cet état. Ainsi, selon l'exemple de la figure 2 :

- Le niveau *R* comporte un seul noeud noté $NO_R^1$. Ce noeud comporte les données suivantes :

  - l'histogramme global de la propriété principale (proportions globales pour *PP*=0 et *PP*=1).

- l'histogramme global de la valeur de chaque propriété auxiliaire.

- Le niveau *N2* comporte quatre noeuds notés $NO_{N2}^1$ à $NO_{N2}^4$. Le noeud $NO_{N2}^2$ par exemple, comporte les données suivantes :

  - l'histogramme des valeurs de la propriété principale au centre de la fenêtre d'exploration (pixel $u_c$) sachant que $u_1 = 0$ et que $u_2 = 1$ ;
  - l'histogramme des valeurs de la propriété auxiliaire au centre de la fenêtre d'exploration (pixel $u_c$) sachant que $u_1 = 0$ et que $u_2 = 1$.

Du fait que tous les pixels des images d'apprentissage sont associés à une valeur, on peut construire complètement l'arbre. C'est-à-dire que l'on détermine pour tous les états les histogrammes pour tous les voisinages de 0 pixel (pixel central) à *L* pixels (taille de la fenêtre d'exploration). A chaque noeud de l'arbre est associée une loi de probabilité (histogramme) de la propriété physique principale *PP* au pixel central du voisinage conditionnée par l'état du voisinage et une loi de probabilité (histogramme) de chaque propriété physique auxiliaire *PA* conditionnée par le même état.

4- Acquisition des données réelles relatives aux propriétés auxiliaires

A ce stade, on dispose de statistiques empiriques qui permettent de déterminer une image de la propriété physique principale à partir d'images des différentes propriétés physiques auxiliaires. Il est donc nécessaire, pour construire l'image du réservoir recherchée, d'acquérir des données permettant de construire des images de propriétés physiques auxiliaires, chaque image reflétant les valeurs réelles au sein du gisement étudié. En effet, il est nécessaire d'acquérir des images de propriétés auxiliaires correspondant à des données réelles, et non plus à des données d'apprentissage issues de la première image d'apprentissage de la propriété principale. Ces données auxiliaires sont dites réelles, car issues de mesures réalisées dans la zone souterraine étudiée.

Pour construire ces images, on affecte à chaque pixel de ces images une valeur de propriété physique auxiliaire obtenue à partir de mesures réalisées au sein du milieu hétérogène poreux.

On peut par exemple réaliser une campagne sismique pour obtenir des données sur toute la zone étudiée (c'est-à-dire la zone représentée par les images). De cette façon, on obtient une image dont chaque pixel est renseigné par une valeur d'amplitude sismique. Tout autre attribut sismique peut bien entendu être utilisé.

On peut également utiliser un ensemble de diagraphies (mesures réalisées au sein d'un puits, en continu). Ces données *PC* peuvent être acquises au niveau de puits d'exploration ou de production. Ces données diagraphiques, une fois interprétées, permettent de déterminer les différentes lithologies rencontrées au cours du forage du puits. A partir de ces données, on peut construire par extrapolation des cartes de proportions lithologiques. Les données *PC* peuvent également être des données de propriété principale *PP* réelles (lithologies, fracturation, présence ou non de chenaux, ...).

5- Construction d'une image représentative de la répartition de la propriété principale *PP* contrainte par la répartition de l'ensemble des propriétés auxiliaires *PA* dans le champ réservoir

Cette étape consiste à construire une image, constituant un modèle géologique représentatif de la structure et du comportement de la zone souterraine (réservoir pétrolier, aquifère), permettant de déterminer des paramètres techniques relatifs à la recherche, l'étude ou l'exploitation de la zone. Cette image représente la distribution de la propriété principale dans la zone souterraine étudiée. Il ne s'agit plus d'une distribution quelconque, mais de la distribution censée représenter au mieux la réalité. Pour ce faire, on utilise les statistiques stockées dans la structure d'arbre, éventuellement des données ponctuelles de propriété principale (lithologies renseignées aux puits par exemple), et des images représentant la distribution de plusieurs propriétés auxiliaires choisies aux étapes précédentes (amplitudes sismiques ou proportions lithologiques par exemple). Cette image a la même structure (nombre et localisation des pixels) que les images d'apprentissage.

On construit l'image représentative de la propriété principale *PP* à l'aide d'un algorithme séquentiel : tous les pixels de l'image sont simulés les uns après les autres dans un ordre tiré au hasard ou ordonné. La simulation d'une valeur de propriété principale associée à un pixel comporte deux étapes :

- détermination de la loi de probabilité de la propriété physique principale *PP* en fonction d'un voisinage non nécessairement complet au cours de la simulation;

- simulation de la propriété physique principale *PP.*

Dans un premier temps, on définit un voisinage autour du pixel, pour lequel on souhaite déterminer la valeur de la propriété principale. Ce voisinage, non nécessairement complet tel que celui illustré sur la figure 1C, est composé des pixels préalablement simulés et éventuellement des pixels où la valeur de la propriété principale est mesurée (*PC*). Ces pixels sont situés dans un domaine de taille inférieure ou égale à celle du template, c'est-à-dire que tous les pixels du voisinage appartiennent aux pixels du template. Ces pixels sont consécutifs ($u_1$, $u_2$, etc.). Ils forment un voisinage de taille s.

Dans un deuxième temps, on calcule pour chaque pixel du voisinage, la loi de probabilité de la propriété principale à simuler, connaissant l'état de ce voisinage et la valeur de chaque propriété auxiliaire au pixel de simulation en utilisant les statistiques empiriques stockées dans l'arbre. Le calcul de la loi de probabilité conditionnelle se fait en déterminant parmi les lois de probabilité conditionnelle stockées dans l'arbre, celles qui correspondent au point à simuler, c'est-à-dire celles dont le voisinage est compatible avec le voisinage du pixel à simuler. On procède de la manière suivante:

- on sélectionne les noeuds de l'arbre correspondant au niveau *Ns* de l'arbre (niveau correspondant à un voisinage complet de taille s) ;

- parmi l'ensemble des noeuds du niveau *Ns,* on identifie ceux qui sont compatibles avec l'état du voisinage, c'est-à-dire ceux dont les valeurs de la propriété principale *PP* des pixels du voisinage (état) sont identiques à celles du voisinage du pixel à simuler ;

- parmi les noeuds ainsi identifiés, on retient ceux dont la loi de probabilité (histogramme) de chaque variable auxiliaire est compatible avec sa donnée réelle issue de l'image précédemment construite (amplitude sismique issue de campagne sismique par exemple). On dit qu'une donnée auxiliaire est compatible avec une loi de probabilité si, par exemple, cette donnée est comprise entre le minimum et le maximum des valeurs auxiliaires de cette loi, ou bien cette loi admet une probabilité non nulle pour la donnée auxiliaire;

- enfin, on calcule la loi (histogramme) de la propriété principale du pixel au centre du voisinage en utilisant les noeuds retenus et en multipliant entre elles les différentes lois de probabilités associées à ces noeuds.

Une fois la loi de probabilité calculée, on procède à un tirage au sort de la propriété principale au pixel de simulation selon cette loi.

**Exemples d'application de la méthode**

Le procédé selon l'invention est particulièrement bien adapté pour construire une image représentative de l'organisation spatiale de lithologies au sein d'un gisement pétrolier. Il s'agit d'obtenir une image constituant une carte, sur laquelle l'emplacement des différentes lithologies est représenté : calcaire, grès, argile, ...

<u>Choix des propriétés</u>

Pour obtenir une telle image, selon le procédé, on considère donc les lithologies (F0, F1 et F2) comme propriété principale (PP). On choisit d'utiliser comme propriétés auxiliaires, les proportions lithologiques.

<u>Construction des images d'apprentissage</u>

1- Image d'apprentissage de la propriété principale *PP*

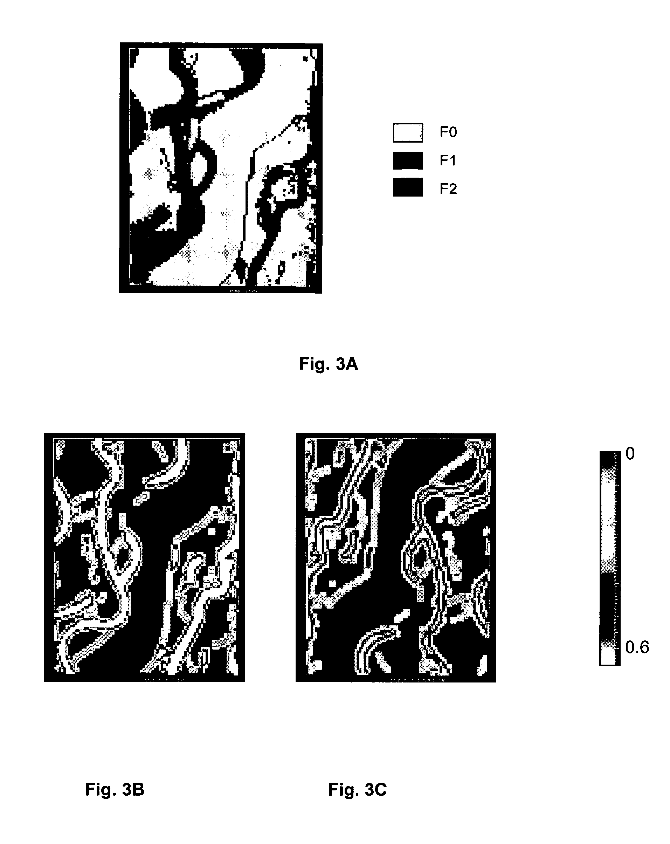

Pour construire la première image d'apprentissage représentative de la structure géométrique de la propriété principale *PP*, on considère un modèle génétique de chenaux méandriformes. La figure 3A montre une réalisation de simulation pour trois lithologies (F0, F1 et F2), sur une grille cartésienne de 79 x 99 mailles (une maille ayant pour dimension 100 m x 100 m). Cette image est utilisée en tant qu'image d'apprentissage de la propriété principale.

2- Images d'apprentissage de propriétés auxiliaires *PA*

A partir de cette image d'apprentissage principale (figure 3A), on construit trois images d'apprentissage auxiliaires représentant les proportions pour chacune des trois lithologies de l'image d'apprentissage principale.

Pour ce faire, on calcule les proportions au moyen d'une moyenne mobile de la variable principale, avec une fenêtre de 3x3 à partir de l'image d'apprentissage principale, et ce pour chaque lithologie. Le résultat pour la lithologie F1, c'est-à-dire les proportions de la lithologie F1 issue de l'image initiale (figure 3A), est illustré sur la figure 3B.

Analyses statistiques des quatre images d'apprentissage

Pour effectuer ces analyses et calculer les statistiques empiriques à partir des valeurs contenues dans l'ensemble des images d'apprentissage, on définit une fenêtre d'exploration (template) concentrique de 150 points.

Acquisition des données réelles relatives aux propriétés auxiliaires

A ce stade, on a des statistiques empiriques qui permettent de déterminer une image des lithologies à partir d'images des différentes proportions de lithologies. Il est donc nécessaire, pour construire l'image du réservoir recherchée, d'acquérir des données permettant de construire des images de proportions lithologiques, chaque image reflétant les proportions réelles au sein du gisement étudié. En effet, il est nécessaire d'acquérir des images de propriétés auxiliaires correspondant à des données réelles, et non plus à des données d'apprentissage issues de la première image d'apprentissage de la propriété principale.
Selon notre exemple, il s'agit d'acquérir des cartes de proportions lithologiques, pour chacune des trois lithologies.
La figure 3C illustre une carte de proportion de la lithologie F1 « réelle », c'est-à-dire que l'on souhaite respecter. C'est une des trois cartes (une pour chaque lithologie) qui contraint la construction de l'image recherchée.

Construction de la nouvelle image

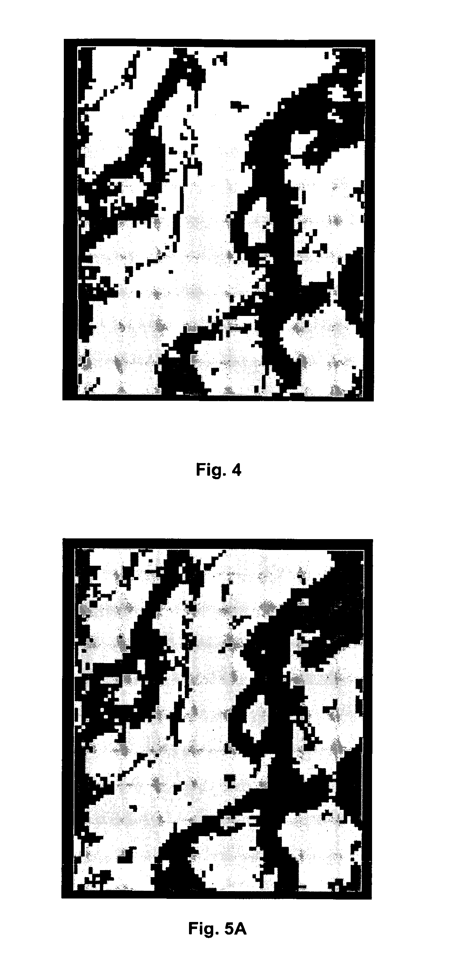

A partir des analyses statistiques, on construit une image représentative de la répartition des lithologies contrainte par la répartition des trois proportions lithologiques. Le résultat est illustré sur la figure 4. On observe une bonne reproduction de la continuité des structures géométriques de l'image d'apprentissage. De plus, le procédé permet de reproduire de façon conforme les proportions lithologiques de l'image d'apprentissage, tout en honorant la contrainte auxiliaire.

**Avantages du procédé selon l'invention - Comparaison avec une méthode antérieure**

Dans le but d'évaluer l'intérêt de la méthode, les résultats obtenus par la méthode selon l'invention, sont comparés avec la méthode multipoints non stationnaire avec application d'une seule contrainte décrite dans la publication suivante :

Chugunova, T and Hu, L.Y. (2008): "Multiple-point simulations constrained to continuous auxiliary data", Mathematical Geosciences, Vo1.40, No.2

Cette méthode est limitée à l'application d'une seule contrainte. Pour construire une image représentative d'un gisement pétrolier, à partir de multiples données auxiliaires (multiples contraintes), il est donc nécessaire de réaliser les étapes suivantes :

- on réalise trois simulations multipoints non stationnaires pour les trois lithologies à partir des images d'apprentissage principale et auxiliaires.

- on combine les trois images binaires obtenues pour former une image multi lithologies. Pour ce faire, il est nécessaire d'appliquer un ordre hiérarchique lors du regroupement de lithologies ; par exemple : lithologie F1 dominant par rapport au lithologie F2 lui même dominant par rapport au lithologie F0, qui sera noté ordre F1>F2>F0 par souci de simplification.

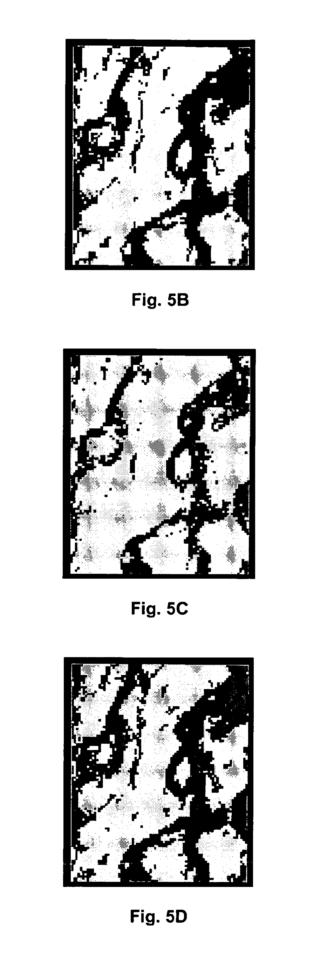

Six combinaisons sont possibles, mais comme certaines donnent des résultats similaires, seuls quatre ordres différents sont présentés dans les résultats de simulation en figure 5A à 5D. Le choix de l'ordre optimal est dépendant de la connaissance géologique de l'environnement de dépôt. Dans le cas présent (chenaux méandriformes), l'ordre le plus réaliste correspond à l'ordre F1>F2>F0 (figure 5B), les lithologies de chenaux étant érosifs par rapport aux autres lithologies.
Comme le montrent les figures 5A à 5D, la simulation multipoints individuelle des trois lithologies suivie d'une combinaison des images binaires permet de reproduire correctement les structures géométriques propres aux chenaux méandriformes. Mais cette technique ne respecte pas correctement les proportions lithologiques initiales. En effet, le choix de l'ordre hiérarchique entraîne une variabilité non négligeable des proportions lithologiques (tableau 1) :

|  | F0 | F1 | F2 |
|---|---|---|---|
| **Image d'apprentissage - Figure 3A** | **65%** | **20%** | **15%** |
| Résultat multipoints ordre 0>2>1 -Figure 5A | 73% | 14% | 13% |
| Résultat multipoints ordre 1>2>0 -Figure 5B | 59% | 28% | 13% |
| Résultat multipoints ordre 2>1>0 -Figure 5C | 59% | 18% | 23% |
| Résultat multipoints ordre 2>0>1 -Figure 5D | 63% | 13% | 24% |
| **Résultat multi lithologies - Figure 4** | **65%** | **21%** | **14%** |

On note que le résultat respectant le mieux les proportions initiales de l'image d'apprentissage correspond au regroupement des lithologies ayant une signification géologique (figure 5B). La définition d'un ordre de priorité des lithologies est donc primordiale pour l'utilisation de cette méthode.

Pour s'affranchir du choix de l'ordre de regroupement nécessitant une connaissance de l'environnement géologique, la méthode selon l'invention est appliquée (figure 4). On observe une meilleure reproduction de la continuité des structures géométriques de l'image d'apprentissage. De plus, pour toutes les réalisations effectuées, seules les simulations multi lithologies permettent de reproduire de façon conforme les proportions lithologiques de l'image d'apprentissage tout en honorant la contrainte auxiliaire.

L'intérêt de la méthode selon l'invention est donc immédiat, puisque la méthode améliore la reproduction du motif géométrique et la reproduction de la contrainte. Elle permet également d'honorer les proportions lithologiques initiales, tout en s'affranchissant de la définition d'un ordre de priorité des lithologies. On remarque également que cette méthode apporte un gain de temps notable, en évitant les étapes répétitives de simulations individuelles des différentes lithologies.

## Revendications

1.   Procédé de construction d'une image représentative de la distribution d'une propriété physique catégorielle dans un milieu hétérogène poreux, chaque pixel de ladite image étant associé à une position géographique, et dans lequel :

- on construit une première image d'apprentissage en affectant à chaque pixel de cette image une valeur de propriété physique catégorielle ;
- on choisit au moins deux propriétés physiques auxiliaires, dont les distributions dans l'espace sont représentatives de la distribution dans l'espace de ladite propriété physique catégorielle ;
- on construit, pour chaque propriété physique auxiliaire, une image d'apprentissage, en affectant à chaque pixel de ces images une valeur de propriété physique auxiliaire déterminée à partir de ladite première image d'apprentissage ;
- on définit pour tout pixel d'une image d'apprentissage, dit pixel central, un voisinage de $L$ pixels les plus proches du pixel central, et l'on détermine pour tous les voisinages de 0 pixel à $L$ pixels et pour tous les états particuliers d'un voisinage, c'est-à-dire l'ensemble des valeurs de la propriété physique catégorielle prises par les pixels du voisinage : un histogramme empirique des valeurs de la propriété physique catégorielle au centre dudit voisinage conditionné par ledit état, et un histogramme empirique des valeurs de chaque propriété physique auxiliaire au centre dudit voisinage conditionné par ledit état ;
- on construit, pour chaque propriété physique auxiliaire, une image, en affectant à chaque pixel de ces images une valeur de propriété physique auxiliaire obtenue à partir de mesures réalisées au sein dudit milieu hétérogène poreux ; et pour chaque pixel de l'image à construire,
- on calcule une loi de probabilité de ladite propriété physique catégorielle, à partir de valeurs prises par l'ensemble des pixels d'un voisinage dudit pixel, des valeurs audit pixel desdites propriétés physiques auxiliaires issues desdites images réelles, et desdits histogrammes empiriques ;
- on détermine une valeur de propriété catégorielle audit pixel de l'image à construire, en effectuant un tirage aléatoire dans ladite loi de probabilité ainsi calculée ; et
- on construit ladite image représentative de la distribution de ladite propriété physique catégorielle, en répétant les deux dernières étapes pour chaque pixel de l'image à construire.

2.   Procédé selon la revendication 1, dans lequel on détermine les histogrammes en scannant simultanément lesdites images d'apprentissage à l'aide dudit voisinage.

**3.** Procédé selon l'une des revendications 1 et 2, dans lequel les histogrammes sont stockés dans une structure d'arbre constituée d'un ensemble de noeuds de niveaux indicés entre 0 et ledit nombre $L$ correspondant à la taille dudit voisinage, un noeud de niveau $n$ correspondant à un voisinage complet de taille $n$, chaque noeud de l'arbre étant associé à un état particulier d'un voisinage complet de la propriété catégorielle $PP$.

**4.** Procédé selon la revendication 3, dans lequel la loi de probabilité de la propriété physique catégorielle, au niveau d'un pixel à simuler, est calculée à l'aide des étapes suivantes :

- on sélectionne des noeuds de l'arbre correspondant à un niveau $Ns$, correspondant à un voisinage complet de taille s ;
- parmi l'ensemble des noeuds du niveau $Ns$, on identifie ceux dont les valeurs de la propriété physique catégorielle des pixels du voisinage sont identiques à celles du voisinage du pixel à simuler ;
- parmi les noeuds ainsi identifiés, on retient ceux dont l'histogramme empirique de chaque propriété physique auxiliaire est compatible avec la propriété physique auxiliaire correspondante, obtenue à partir de mesures ;
- on calcule la loi de la propriété physique catégorielle dudit pixel à simuler en utilisant les noeuds retenus et en multipliant entre eux les histogrammes empiriques déterminés pour lesdits noeuds.

**5.** Procédé selon la revendication 4, dans lequel une propriété physique auxiliaire est compatible avec un histogramme empirique, si cette propriété est comprise entre le minimum et le maximum des valeurs auxiliaires de cet histogramme.

**6.** Procédé selon la revendication 4, dans lequel une propriété physique auxiliaire est compatible avec un histogramme empirique si cet histogramme admet une probabilité non nulle pour la propriété physique auxiliaire.

**7.** Procédé selon l'une des revendications précédentes, dans lequel ladite propriété physique catégorielle est choisie parmi l'une des propriétés suivantes : lithologie, état de fracturation, présence de chenaux.

**8.** Procédé selon l'une des revendications précédentes, dans lequel lesdites propriétés physiques auxiliaires sont choisies parmi les propriétés suivantes : proportions lithologiques, densité de fracturation, attributs sismiques.

| $u_{11}$ | $u_{12}$ | $u_{13}$ | $u_{14}$ | $u_{15}$ |
|---|---|---|---|---|
| $u_{10}$ | $u_5$ | $u_1$ | $u_6$ | $u_{16}$ |
| $u_9$ | $u_4$ | $u_c$ | $u_2$ | $u_{17}$ |
| $u_{24}$ | $u_8$ | $u_3$ | $u_7$ | $u_{18}$ |
| $u_{23}$ | $u_{22}$ | $u_{21}$ | $u_{20}$ | $u_{19}$ |

**Fig. 1A**

| | $u_5$ | $u_1$ | $u_6$ |
|---|---|---|---|
| $u_9$ | $u_4$ | $u_c$ | $u_2$ |
| | $u_8$ | $u_3$ | $u_8$ |

**Fig. 1B**

**Fig. 1C**

**Fig. 2**

FO
F1
F2

**Fig. 3A**

0

0.6

**Fig. 3B**          **Fig. 3C**

Fig. 4

Fig. 5A

Fig. 5B

Fig. 5C

Fig. 5D

## RÉFÉRENCES CITÉES DANS LA DESCRIPTION

### Documents brevets cités dans la description

- FR 2905181

### Littérature non-brevet citée dans la description

- Multivariate geostatistics : beyond bivariate moments. **Guardiano, F. ; Srivastava, M.** Geostatistics Troia'92. Kluwer Acad. Publ, 1993, vol. 1, 133-144
- Sequential simulation drawing structures from training images. **Strebelle S. ; Journel, A.** Geostatistics 2000. 2000, vol. 1
- Sequential simulation drawing structures from training images. **Strebelle S.** Ph.D. Thesis. Stanford University, 2000
- **Journel A.G.** Combining Knowledge From Diverse Sources: An Alternative to Traditional Data Independence Hypotheses. *Math.Geology,* 2002, vol. 35 (5
- **Strebelle S. ; Payrazyan K. ; Caers J.** Modeling of a Deepwater Turbidity Reservoir Conditional to Seismic Data Using Multiple-Point Geostatistics. *SPE 77425,* 2002
- **Chugunova, T ; Hu, L.Y.** Multiple-point simulations constrained to continuous auxiliary data. *Mathematical Geosciences,* 2008, vol. 40 (2
- **Hu, L.Y. ; Joseph, P. ; Dubrule, O.** Random genetic simulation of the internal geometry of deltaic sand bodies. *SPE Formation Evaluation,* Décembre 1994, 245-250
- **Lopez, S. ; Galli, A. ; Cojan, I.** Fluvial meandering channelized reservoirs: a stochastic & process-based approach. *Proceedings of the of the Annual conference of the international association for mathematical geology,* 06 Septembre 2001
- Sequential simulation drawing structures from training images. **Strebelle S.** Ph.D. Thesis. Stanford University, 2000
- Sequential simulation drawing structures from training images. **Strebelle S. ; Journel, A.** Geostatistics. 2000, vol. 1